# EUROPEAN PATENT APPLICATION

(11) **EP 1 193 585 A2**
(43) Date of publication of application: **03.04.2002**
(21) Application number: 01122643.8
(22) Date of filing: 27.09.2001
(51) Int. Cl.: G06F 1/00

(54) **Encrypted file system, encrypted file retrieval method, and computer-readable medium**

(30) Priority: 27.09.2000 JP 2000294010
(71) Applicant: NEC CORPORATION, Tokyo (JP)
(72) Inventor: Hamada, Tomohiro, Koto-ku, Tokyo (JP)
(74) Representative: VOSSIUS & PARTNER

(57) **Abstract**

A registration device registers, in an encrypted file, records in which at a least key item among a plurality of items that is a key during a retrieval is encrypted. At this time, the registration device generates encrypted data of entire key items by encrypting the data of key items in character units and then combining. The retrieval device executes a complete-match and partial match retrieval from the encrypted file using an encrypted retrieval key in which a retrieval key that has been given as a retrieval condition has been encrypted in character units and then combined.

## Description

The present invention relates to an encrypted file system for encrypting and storing data and to a method of retrieving an encrypted file.

With the popularization of the Internet, a multitude of various types of information are provided on the Internet. However, for those entities that offer information, there is the security risk that information that should not be offered, such as personal information or company information, will be leaked onto the Internet or stolen. Techniques exist for encrypting database files as a safeguard against leaks or theft. Nevertheless, the information of a database file must still be provided to members within a company who need it, and techniques are necessary for retrieving encrypted files.

The most basic retrieval method for an encrypted file is to decrypt all of the contents of the encrypted file, store the decrypted contents in another database file of the same structure, and then retrieve data from this file. This method will be referred to hereinbelow as the first method of the prior art.

Another method of retrieval of an encrypted file is described in Japanese Patent Laid-open No. 11001/2000. In this prior-art method, an encrypted file is retrieved by encrypting a retrieval keyword that has been inputted as normal text. In more concrete terms, a plurality of files that have been encrypted beforehand are decrypted, sets of keywords contained in each file and file names in which the keywords were contained are extracted, and an index is generated in which the keywords in each set are encrypted. For example, if the keyword "Suzuki Ichiro" is contained in a particular file A, a set is generated containing the encrypted data of "Suzuki Ichiro" and the name of file A. The encrypted data are generally random data strings, and because this notation can be complex, an alphabet character string will be used in this specification for the sake of convenience. Here, the result of encrypting "Suzuki Ichiro" will be assumed to be "zdsiukiio." Next, if "Suzuki Ichiro" is entered as input from the user as the retrieval keyword, this is encrypted to generate the encrypted retrieval keyword "zdsiukiio," this is collated with the encrypted keywords in the index, and the name "file A" is extracted. This method is referred to hereinbelow as the second method of the prior art.

The first method of the prior art entails some security risks because the database contains decrypted data. On the other hand, although the second method of the prior art ensures confidentiality of data in the files because retrieval is performed with data in an encrypted state, there is the problem that a partial-match search cannot be performed. This problem arises because data resulting from encrypting an entire character string of a particular length do not contain the data resulting from encrypting a portion of the character string. When retrieving information regarding an individual, for example, the full name that specifies the individual may in some cases be used as the retrieval keyword, but in other cases, the individual's family name alone may also be used as the retrieval keyword. In such a case, when the key item of the encrypted file is the full name in the prior-art method, the entire "full name" is encrypted as a unit and registered. When a particular retrieval key is applied as input, retrieval is performed with an encrypted retrieval key in which the entire retrieval key is encrypted as a whole. However, this type of partial-match retrieval cannot be implemented because, for example, the result "zdsiukiio" of encrypting the full name "Suzuki Ichiro" as one unit as in the previously described example does not contain the data resulting from encrypting only the family name "Suzuki."

The present invention was achieved for the purpose of solving the above-described problems of the prior art, and has as its object the provision of an encrypted file system and encrypted file retrieval method in which a partial-match search can be performed with data in an encrypted state.

The encrypted file system of the present invention is provided with: a file for storing records in which at least a key item among a plurality of items that is the key during retrieval is encrypted and in which the encryption of key items is realized by encrypting the data of the key items in character units and then combining; and a retrieval device for performing retrieval from the file using an encrypted retrieval key in which a retrieval key that is provided as the retrieval conditions has been encrypted in character units and then combined.

In addition, the above-described retrieval device includes: a resolving means for resolving a retrieval key into character units; an encryption means for generating an encrypted retrieval key by encrypting each of the individual character units that have been resolved and obtained and then combining; a retrieval means for retrieving from the file those records having a key item that completely matches or partially matches the encrypted retrieval key; and a decryption means for decrypting records that have been retrieved from the file and outputting as the retrieval results.

The encrypted file system of the present invention further includes a registration device that registers in the file those records in which at least a key item among a plurality of items that is the key in a retrieval is encrypted, and that performs encryption of key items by encrypting data of the key items in character units and then combining. In addition, this registration device includes: a resolving means for resolving the data of key items of records that are to be registered into character units, and encryption means for encrypting entire key items by encrypting each individual character unit obtained by resolution and then combining.

The encrypted file retrieval method of the present invention includes steps of: (a) registering, in a file, records in which at least a key item among a plurality of items that is a key in a retrieval is encrypted, wherein encryption of key items is realized by encrypting the data of key items in character units and then combining; and (b) performing retrieval from the file using an encrypted retrieval key in which a retrieval key that is given as the retrieval condition has been encrypted in character units and then combined.

The above-described Step (b) further includes steps of: resolving a retrieval key into character units; generating an encrypted retrieval key by encrypting each of the character units that has been obtained by resolving and then combining; a step for retrieving from the file those records having key items that completely match or partially match the encrypted retrieval key; and a step for decrypting the records that have been retrieved from the file and outputting as the result of retrieval.

The above-described Step (a) further includes steps of: resolving data of key items of records that are to be registered into character units; and encrypting the entire key items by individually encrypting each of the character units obtained by resolving and then combining.

In the present invention, the registration of an encrypted record in a file is implemented by encrypting the data of key items in character units and then combining. When retrieving, files are retrieved using an encrypted retrieval key in which the retrieval key has been encrypted in character units and then combined.

The above and other objects, features, and advantages of the present invention will become apparent from the following description based on the accompanying drawings which illustrate examples of preferred embodiments of the present invention.

Fig. 1 is a block diagram showing an example of the encrypted file system of the present invention.

Fig. 2 shows an example of the content of an encrypted file in an embodiment of the present invention.

Fig. 3 shows an example of the registration screen of the registration device in an embodiment of the present invention.

Fig. 4 is a flow chart showing an example of the processing of the registration device in an embodiment of the present invention.

Fig. 5 is an explanatory figure of the method of resolving a key item into character units in an embodiment of the present invention.

Fig. 6 is an explanatory figure of the method of encrypting a key item that has been resolved into character units in an embodiment of the present invention.

Fig. 7 shows an example of the retrieval screen of the retrieval device in an embodiment of the present invention.

Fig. 8 is a flow chart showing an example of the processing of a retrieval device in an embodiment of the present invention.

Fig. 9 is an explanatory figure of the method for resolving a retrieval key into character units and then encrypting in an embodiment of the present invention.

Fig. 10 gives a schematic representation of the state when carrying out retrieval processing by the retrieval device in an embodiment of the present invention.

Fig. 11 is an explanatory figure of the prior art for retrieving from a file in which key items are registered without encryption.

Fig. 12 is an explanatory figure of the prior art for retrieval, by means of an encrypted retrieval key in which the entire retrieval key has been encrypted as a unit, from an encrypted file in which entire key items are encrypted as a unit and registered.

Referring now to the accompanying figures, embodiments of the present invention are described in detail.

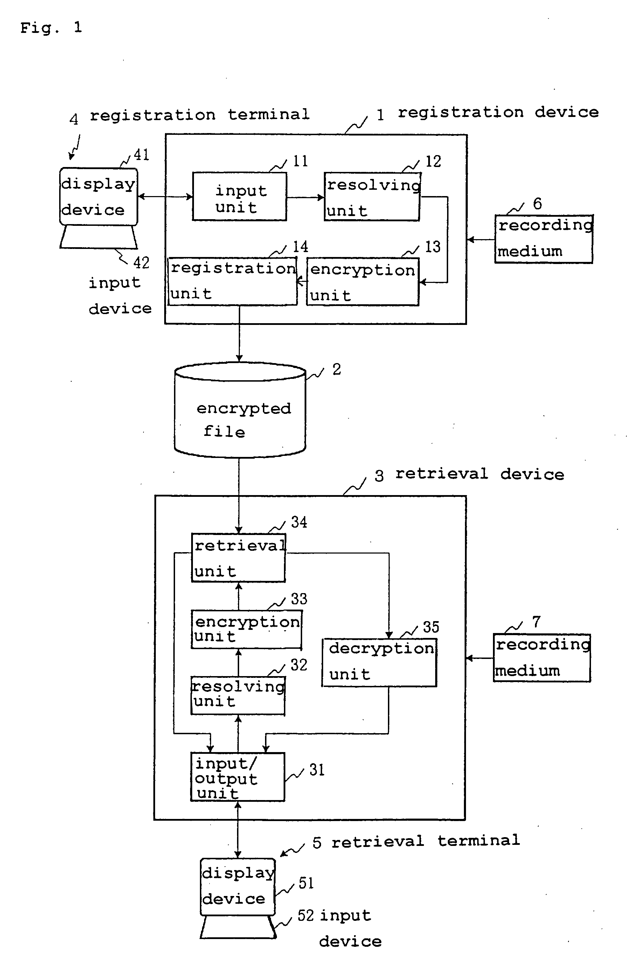

Fig. 1 is a block diagram showing an example of an encrypted file system of the present invention, the system being constituted by: registration device 1, encrypted file 2, retrieval device 3, registration terminal 4, and retrieval terminal 5.

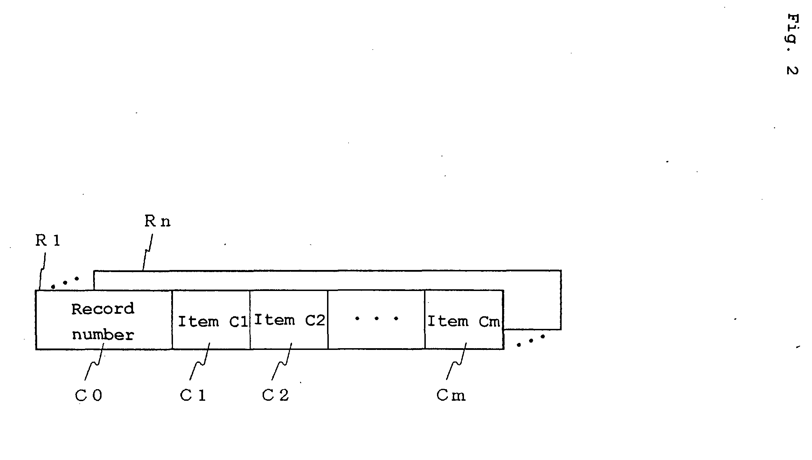

As shown in Fig. 2, encrypted file 2 is constituted by a set of records R1-Rn each having a plurality of items C0-Cm. Each of records R1-Rn corresponds to, for example, a specific individual, and holds information about that individual. For example, item C1 indicates the individual's full name (in Chinese characters), item C2 indicates the full name (using the katakana syllabary), and item Cm indicates the individual's annual income. Other items store various data such as the individual's work position or department. In addition, the record number of item C0 is a record identifier for uniquely identifying the record. In each of records R1-Rn, at least those key items that are the keys in a retrieval are encrypted. For the sake of simplifying the explanation, it is here assumed that item C1 and item C2 are the key items, and that only item Cm of items other than the key items is encrypted. In other words, of items C0-Cm, only items C1, C2 and Cm are encrypted, and the remaining items C3-Cm-1 are not encrypted.

Registration device 1 is a device for registering records in encrypted file 2. Rather than encrypting key items C1 and C2 of a record that is to be registered by encrypting all of the data of key items C1 and C2 as a single unit, registration device 1 encrypts the data of key items C1 and C2 in character units and then combines the encrypted data.

As shown in Fig. 1, registration device 1 is made up by: input unit 11 for receiving as input from the outside records that are to be registered; resolving unit 12 for resolving into character units the data of key items C1 and C2 in a record that has been received; encryption unit 13 for encrypting those items C1, C2, and Cm of a received record that are to be encrypted; and registration unit 14 for registering an encrypted record in encrypted file 2. If the items that are to be encrypted are key items C1 and C2, encryption unit 13 generates encrypted data for the entire key items C1 and C2 by encrypting each individual character unit that has been resolved by resolving unit 12 and then combining the result. In the case of items that are to be encrypted other than the key items, such as item Cm, the item Cm is encrypted as a unit. Any encryption method may be adopted for encrypting, and any key such as a public key or common key may be used as the encryption key. In this embodiment, the encryption key is assumed to be established beforehand in registration device 1.

Registration device 1 can be constituted by the central processing unit and main memory that constitute the computer of a personal computer or workstation server, and a control program. In this case, the control program: is stored on a mechanically readable recording medium 6 such as a CD-ROM, semiconductor memory, or magnetic disk; is read to the computer when, for example, starting up the computer that constitutes registration device 1; and realizes in the computer: input unit 11, resolving unit 12, encryption unit 13, and registration unit 14 by controlling the operation of the computer.

Registration terminal 4 is a device that is used by the user when creating in ordinary text a record that is to be registered in encrypted file 2 and submitting a request to registration device 1 for registration of the record; and is provided with display device 41 and input device 42. The user edits the content of the record on the screen of display device 41 and submits a request to registration device 1 for registration of the record by means of instructions from input device 42.

Retrieval terminal 5 is a device that is employed by the user when retrieving from encrypted file 2, and is provided with display device 51 and input device 52. The user edits a retrieval condition such as a character string that is to become the retrieval key on the screen of display device 51 and, by means of instructions from input device 52, submits to retrieval device 3 a request for retrieval based on the retrieval condition.

Retrieval device 3 is a device for retrieving from encrypted file 2 those records that agree with the retrieval condition submitted from the user and presenting the records to the user. Retrieval device 3 searches encrypted file 2 using the encrypted retrieval key in which the retrieval key that was submitted by the user has been encrypted. In this case, an encrypted retrieval key is used in which the retrieval key has been encrypted in character units and then combined, rather than using an encrypted retrieval key in which the entire retrieval key is encrypted as a single unit.

As shown in Fig. 1, retrieval device 3 is made up by: input/output unit 31 for exchanging data with retrieval terminal 5; resolving unit 32 for resolving into character units the retrieval keys in retrieval conditions that have been entered as input by way of input/output unit 31; encryption unit 33 for generating encrypted retrieval keys by independently encrypting each of the character units that have been resolved by resolving unit 32 and then combining the results; retrieval unit 34 for using the encrypted retrieval key that has been generated by encryption unit 33 to retrieve records that satisfy the retrieval conditions from encrypted file 2; and decryption unit 35 for decrypting records that have been retrieved by retrieval unit 34 and presenting these decrypted records to the user. In this case, encryption unit 33 uses the same encryption method as was used by registration device 1 when encrypting the key items. It is further assumed that the encryption keys that are necessary for this encryption are set in advance in retrieval device 3. It is similarly assumed that the decryption key that is necessary in decryption unit 35 is also set beforehand in retrieval device 3.

Retrieval device 3 may be constituted by the central processing unit and main memory that constitute a computer such as a personal computer or a workstation server, and a control program. In this case, the control program: is stored on mechanically readable recording medium 7 such as a CD-ROM, a semiconductor memory, or a magnetic disk; is read into the computer when, for example, starting up the computer that constitutes retrieval device 3; and realizes in the computer: input/output unit 31, resolving unit 32, encryption unit 33, retrieval unit 34 and decryption unit 35 on that computer by controlling the operations of the computer.

Next, regarding the operations of the encrypted file system of the present embodiment, operation when registering a record to encrypted file 2 is first described.

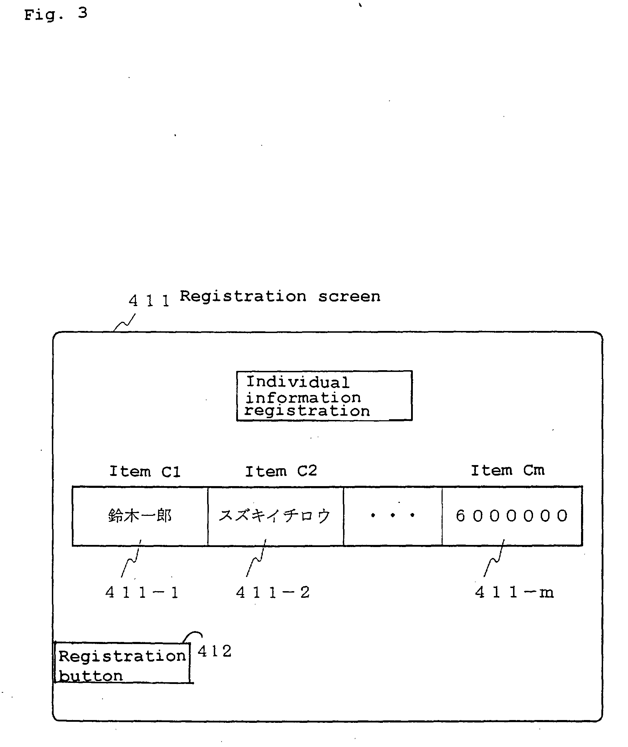

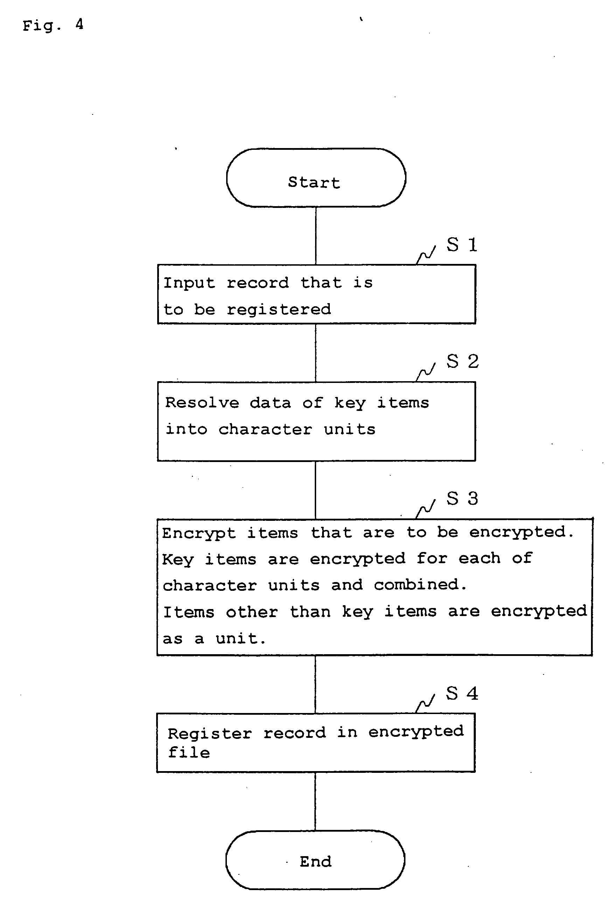

The registrant first operates registration terminal 4 to edit on the screen of display device 41 the content of the record that is to be registered to encrypted file 2. Fig. 3 shows an example of registration screen 411 that is displayed on display device 41. In registration screen 411, input fields from 411-1 to 411-m are fields for entering the content of item C1, item C2, ..., item Cm of the record that is to be registered. The user proceeds by entering data from input device 42 into each of input fields from 411-1 to 411-m. In the example shown in the figure, "Suzu-ki Ichi-rou" composed of four Chinese characters is entered into input field 411-1 of item C1, "Su-zu-ki I-chi-ro-u" composed of seven katakana characters is entered into input field 411-2 of item C2, and a seven-digit numerical value in decimal notation is entered into input field 411-m of item Cm. Although omitted in the figure, data are also entered into the input fields corresponding to from item C3 to item Cm-1. Registration button 412 is a button for instructing registration of records for which editing has been completed to registration device 1. When registration is instructed by means of this registration button 412, registration device 1 begins the processing shown in Fig. 4.

Input unit 11 of registration device 1 first receives data that have been set in input fields from 411-1 to 411-m on registration screen 411 of registration terminal 4 as the values of items from C1 to Cm of the record that is to be registered (S1). Resolving unit 12 next resolves this data into character units for each of items C1 and C2 that are key items (S2). This resolving process is not performed for the data of items other than the key items.

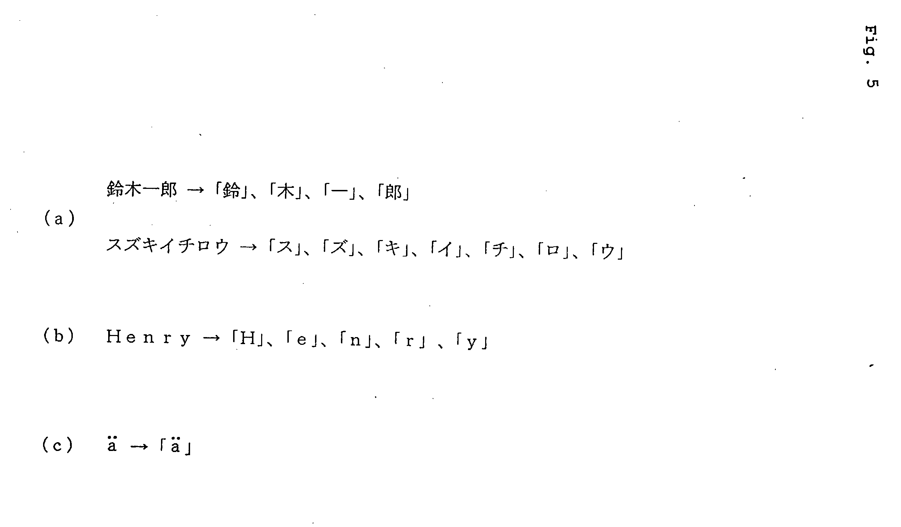

Fig. 5(a) shows the results of resolving into character units the data "Suzu-ki Ichi-rou" of item C1 and the data "Su-zu-ki I-chi-ro-u" of item C2. The data of the key items has thus been resolved into the one-character units shown in registration screen 411. Although Japanese is used in this example, the case is equivalent when another language is used. For example, "Henry" in English is resolved into one-character units of the alphabet as shown in Fig. 5(b). In addition, special characters such as the umlaut in German are also extracted as single character units as shown in Fig. 5(c).

Encryption unit 13 next encrypts each of items C1, C2, and Cm that are to be encrypted among items from C1 to Cm of the record that is to be registered (S3). At this time, the whole of the encrypted data for key items C1 and C2 is generated by performing encryption independently for each of the resolved character units and then combining the encrypted data in the same order as the arrangement of the original character units.

The data of items other than the key items is encrypted together as a unit.

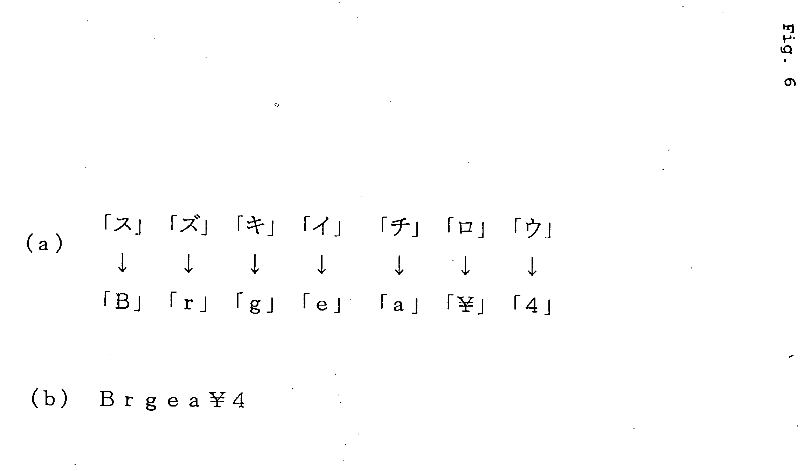

Fig. 6 shows the state of encryption of key items taking as an example "Su-zu-ki I-chi-ro-u," which has been resolved into character units. As shown in Fig. 6(a), each character unit is first encrypted independently to generate the encrypted data B, r, g, e, a, ¥, 4 of each character unit.

Next, as shown in Fig. 6(b), the encrypted data are combined to generate the encrypted data "Brgea¥4" for all of "Su-zu-ki I-chi-ro-u." Each encrypted bit of data B, r, g, e, a,¥, 4 is the encrypted data of one unit and is a random data string. The data length depends on the encryption method and can be of either variable or fixed length. A prescribed bit string that indicates the beginning of encrypted data is placed at the leading portion of a single unit of encrypted data, and a prescribed bit string indicating the end of the encrypted data is placed at the final portion.

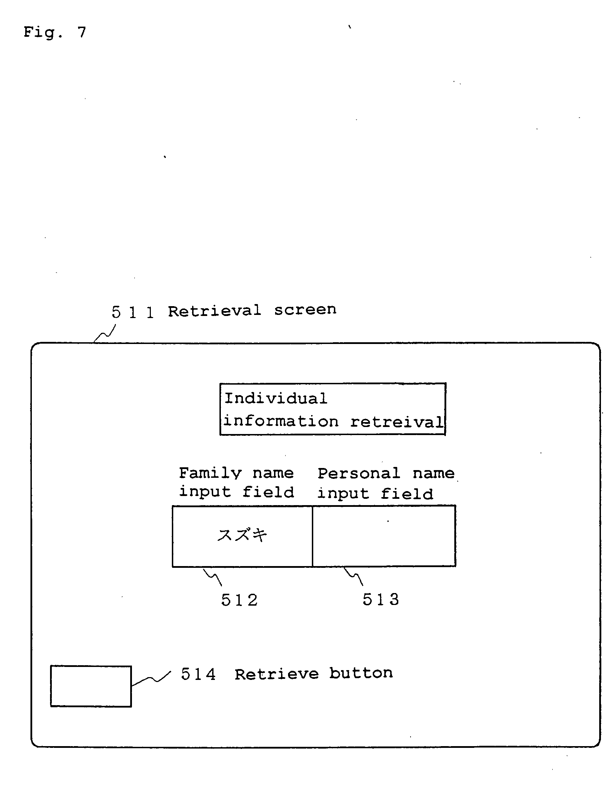

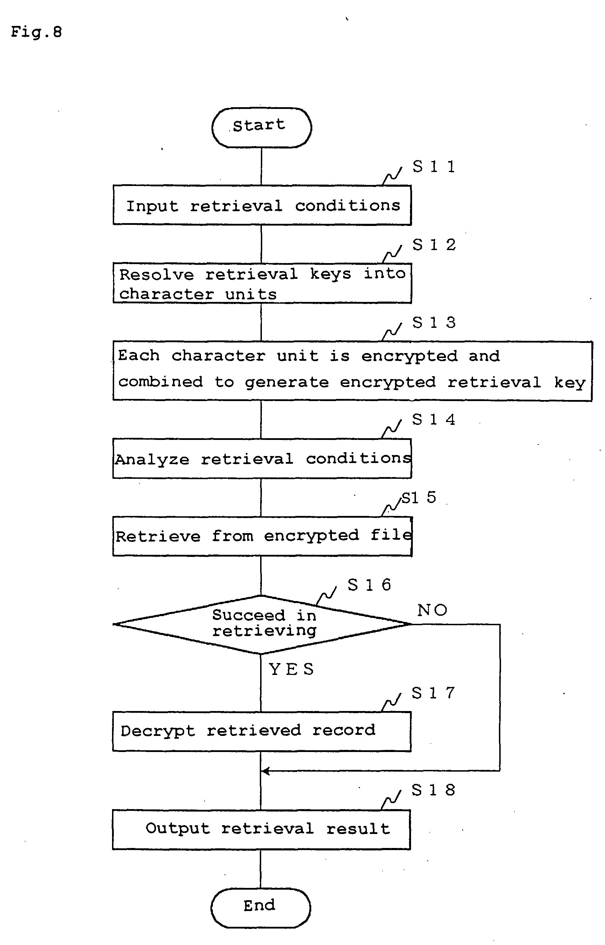

Registration unit 14 next attaches the record number of item C0, which is unique in encrypted file 2, to the record that is the object of registration, this record being in a state such that items C1, C2 and Cm that are to be encrypted have been encrypted by means of encryption unit 13 while the remaining items from C3 to Cm-1 are in an unencrypted state, and then registers the record in encrypted file 2 (S4). Operations when retrieving from encrypted file 2 are next described. The person performing the retrieval first operates retrieval terminal 5 to enter the retrieval conditions. Fig. 7 shows an example of retrieval screen 511 that is displayed on display device 51. This retrieval screen 511 is an example of a retrieval screen for designating in the retrieval key of item C2 the full name, the family name alone, or the personal name alone in katakana and requesting a complete-match retrieval or partial-match retrieval, and is provided with input field 512 for the family name, input field 513 for the personal name, and retrieve button 514. The person performing the retrieval uses input device 52 to enter into input fields 512 and 513 any data that are to be the retrieval key in the form of katakana. In the example shown in the figure, "Su-zu-ki" is entered into the family name input field 512 and the personal name input field 513 is left empty. This is for a case in which the person conducting the retrieval requests a partial-match retrieval. Of course, data may also be entered in the personal name input field 513, this case being equivalent to requesting a complete-match retrieval. Alternatively, a partial-match retrieval in which data are set only in personal name input field 513 is also possible. After setting the retrieval key, the person conducting the retrieval instructs the retrieval by means of retrieve button 514, whereupon retrieval device 3 begins the processing shown in Fig. 8.

Input/output unit 31 of retrieval device 3 first receives retrieval conditions such as retrieval keys from retrieval screen 511 of display device 51 of retrieval terminal 5 (S11). In the retrieval according to retrieval screen 511 of Fig. 7, "Su-zu-ki" of family name input field 512 that has been set as the retrieval key of item C2 and the value "blank" of the personal name input field 513 are received as the retrieval conditions. Resolving unit 32 next resolves the received retrieval keys into character units (S12). Here, as with resolving unit 12 of registration device 1, the received retrieval keys are resolved into units of single characters shown in retrieval screen 511. "Su-zu-ki" is accordingly resolved into "su," "zu," and "ki."

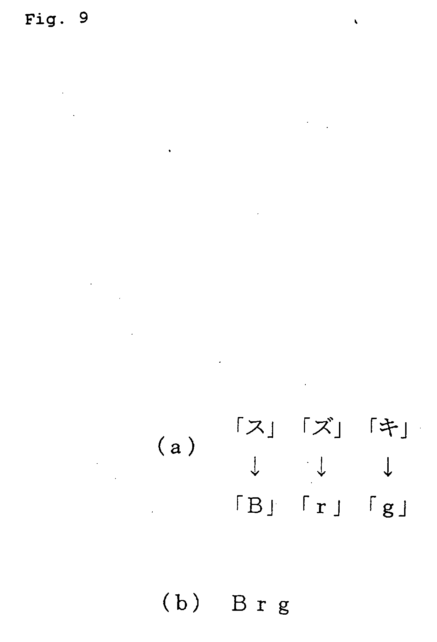

Encryption unit 33 next generates an encrypted retrieval key by independently encrypting each of the character units that have been resolved by resolving unit 32 and then combining the encrypted data in the same order as the original character units. Fig. 9 shows the generation of the encrypted retrieval key taking as an example "Su-zu-ki" that has been resolved into character units. As shown in Fig. 9(a), each character unit is first encrypted independently to generate the encrypted data for each character unit: B, r, and g. Next, as shown in Fig. 9(b), the encrypted data are combined to generate the encrypted retrieval key "Brg" that corresponds to "Su-zu-ki" (S13).

Retrieval unit 34 next receives the encrypted retrieval key that has been generated by encryption unit 33, and analyzes the retrieval conditions, these conditions being that the retrieval key is "Brg," the item that is to be retrieved is C2, and that the retrieval is a partial-match retrieval (S14). Retrieval unit 34 then performs the required retrieval from encrypted file 2 (S15). In other words, in the case of the above-described example, retrieval unit 34 retrieves records that contain the encrypted retrieval key "Brg" in item C2 from within each record of encrypted file 2. If retrieval unit 34 succeeds in retrieving at least one record from encrypted file 2 ("YES" in S16), it passes the acquired record or records to decryption unit 35.

Decryption unit 35 decrypts the encrypted items C1, C2, and Cm in the transferred record or records (S17). Regarding the decryption of key items C1 and C2 at this time, decryption unit 35 decrypts the encrypted data in character units and then combines the decrypted data to generate the whole key items. As for encrypted item Cm that is distinct from key items C1 and C2, the entire item is decrypted as a unit. Decryption unit 35 outputs the decrypted records as the retrieval result to display device 51 by way of input/output unit 31 (S18).

If, on the other hand, retrieval unit 34 fails to retrieve records ("NO" in S16), the retrieval result that records do not exist is outputted by way of input/output unit 31 to display device 51 (S18).

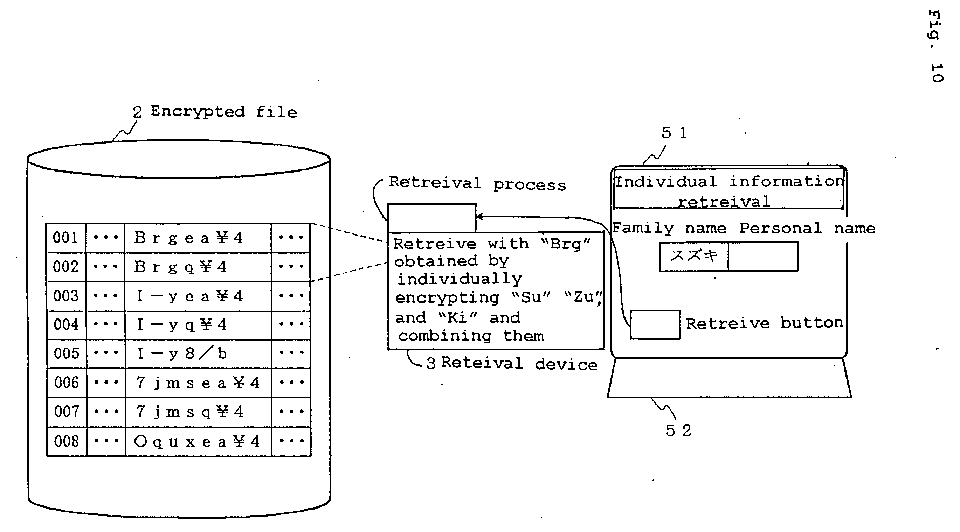

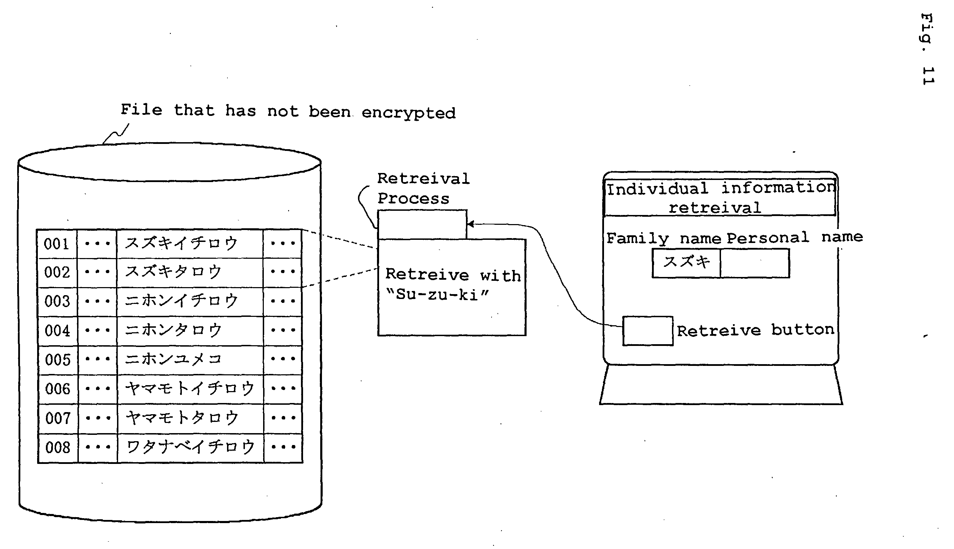

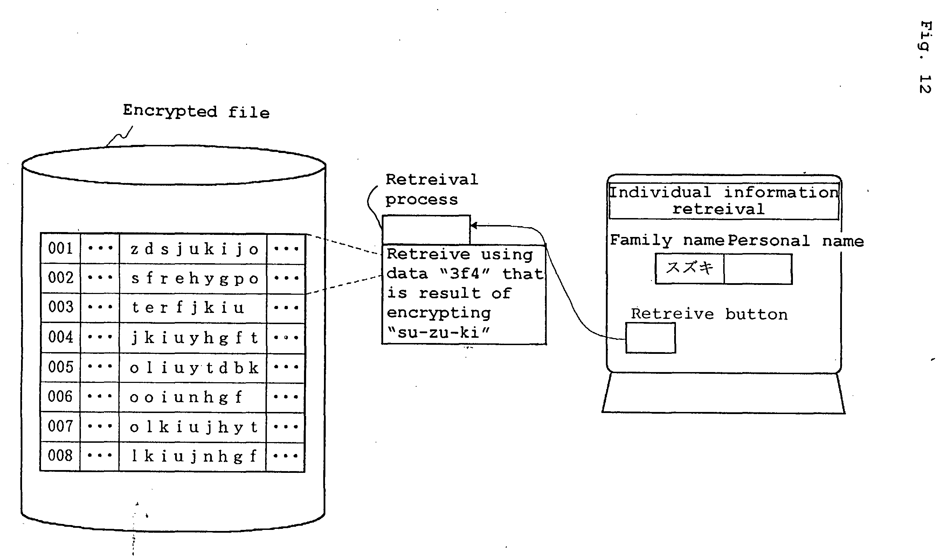

Fig. 10 presents a schematic representation of the retrieval process in retrieval device 3. For the sake of comparison, Fig. 11 shows the prior-art method in which retrieval is performed from a file in which key items are stored without being encrypted, and Fig. 12 shows the prior-art method in which retrieval is performed from an encrypted file in which each key item is encrypted as an entire unit and stored, the retrieval being performed using an encrypted retrieval key in which the entire retrieval key has been encrypted as a unit.

In Fig. 11, retrieval is performed from a file that has not been encrypted with "Su-zu-ki" as the retrieval key. Although a partial-match retrieval is possible, this method entails the problem of security risks because the file is not encrypted. In Fig. 12, retrieval is performed from an encrypted file using the data "3f4" that is the result of encrypting all of "Su-zu-ki" as a unit. In this case, a partial-match retrieval cannot be performed because the key items of the encrypted file have been encrypted as entire units.

In contrast to these examples, retrieval from the encrypted file in the present embodiment is realized as shown in Fig. 10 with "Brg," this "Brg" being obtained by: resolving "Su-zu-ki" into "Su," "zu," and "ki"; individually encrypting these elements; and then combining the encrypted elements. A partial-match retrieval is possible in this case because the key items of the encrypted file are similarly encrypted data that have been encrypted in character units and then combined.

Although an embodiment of the present invention has been described hereinabove, the present invention is not limited to the above-described embodiment and allows various other additions or modifications. For example, although a case was described in the above-described embodiment in which the keys that are required for encryption and decryption were set beforehand in the encrypted file system itself, a constitution is also possible in which keys are held and managed outside the encrypted file system and then used in the encrypted file system when necessary, or in which a user that registers records or a user that retrieves records enters the key as input to the system.

In addition, although records that are registered in encrypted file 2 were successively entered as input from registration terminal 4 that is operated by the person performing registration, records that are to be registered may be stored in a storage device such as a magnetic disk device, and registration device 1 may then read these stored records and perform the registration process. According to the present invention as described in the foregoing explanation, data of key items are encrypted in character units, combined, and then registered in a file. When retrieving, retrieval from the file is performed using an encrypted retrieval key wherein a retrieval key has been encrypted in character units and then combined. This constitution enables a partial-match retrieval in the encrypted state, thereby enabling the performance of a partial-match retrieval while maintaining security of a file.

## Claims

1. An encrypted file system, comprising:
a file for storing records wherein at least a key item among a plurality of items that is a key during retrieval is encrypted, and wherein an encryption of key items is realized by encrypting data of the key items in character units and then combining; and
a retrieval device for performing retrieval from said file using an encrypted retrieval key wherein a retrieval key that is provided as a retrieval condition has been encrypted in character units and then combined.

2. An encrypted file system according to claim 1,
wherein said retrieval device is constituted by:
a resolving means for resolving a retrieval key into character units; and
an encryption means for generating an encrypted retrieval key by encrypting each of the individual character units that have been obtained by resolving and then combining.

3. An encrypted file system according to claim 1 or 2,
wherein said retrieval device comprises a retrieval means for retrieving from said file those records having a key item that completely matches or partially matches an encrypted retrieval key.

4. An encrypted file system according to claim 3,
wherein said retrieval device includes a decryption means for decrypting records that have been retrieved from said file and outputting as retrieval results.

5. A system according to claim 1, 2, 3 or 4, said encrypted file system including a registration device that registers, in said file, records in which at least a key item among a plurality of items that is a key in a retrieval is encrypted, and that performs encryption of key items by encrypting data of the key items in character units and then combining.

6. An encrypted file system according to claim 5,
wherein said registration device comprises:
resolving means for resolving into character units data of key items of records that are to be registered, and encryption means for encrypting entire key items by encrypting each individual character unit obtained by resolving and then combining.

7. An encrypted file retrieval method, comprising the steps of:
(a) performing encryption of key items by encrypting data of the key items in character units and then combining, this step being a step for registering, in a file, records in which at least a key item among a plurality of items that is a key in a retrieval is encrypted; and
(b) performing retrieval from said file using an encrypted retrieval key in which a retrieval key that is given as a retrieval condition has been encrypted in character units and then combined.

8. An encrypted file retrieval method according to claim 7, wherein said Step (b) further comprises the steps of:
resolving a retrieval key into character units; and
generating an encrypted retrieval key by encrypting each of the individual character units that have been obtained by resolving and then combining.

9. A method according to claim 7 or 8,
wherein said Step (b) includes the step of:
retrieving from said file those records having a key item that completely matches or partially matches the encrypted retrieval key.

10. An encrypted file retrieval method according to claim 9 wherein said Step (b) includes the step of:
decrypting records that have been retrieved from said file and outputting as retrieval results.

11. A method according to claim 7, 8, 9 or 10,
wherein said Step (a) includes the steps of:
resolving into character units data of key items of records that are to be registered; and
encrypting entire key items by individually encrypting each of individual character units that have been obtained by resolving and then combining.

12. A recording medium that can be read by a computer in which is recorded a program for causing a computer to function as:
a registration device that is a means for registering, in a file, records in which at least a key item among a plurality of items that is a key in a retrieval is encrypted, and for performing encryption of key items by encrypting data of the key items in character units and then combining; and
a retrieval device for performing retrieval from said file using'an encrypted retrieval key wherein a retrieval key that is provided as a retrieval condition has been encrypted in character units and then combined.

13. A recording medium that can be read by a computer according to claim 12, wherein said retrieval device includes:
a resolving means for resolving a retrieval key into character units; and
an encryption means for generating an encrypted retrieval key by encrypting each of the individual character units that have been obtained by resolving and then combining.

14. A recording medium according to claim 12 or 13, wherein said retrieval device includes a retrieval means for retrieving from said file those records having a key item that completely matches or partially matches an encrypted retrieval key.

15. A recording medium according to claim 14, wherein said retrieval device includes a decryption means for decrypting records that have been retrieved from said file and outputting as retrieval results

16. A recording medium according to claim 15, wherein said registration device comprises:
resolving means for resolving into character units data of key items of records that are to be registered, and encryption means for encrypting entire key items by encrypting each individual character unit that has been obtained by resolving and then combining.
